Europäisches Patentamt

(19) European Patent Office

Office européen des brevets

(11) Publication number: 0 083 845

A1

## (12) EUROPEAN PATENT APPLICATION

(21) Application number: 82306486.0

(51) Int. Cl.³: F 01 N 3/02

(22) Date of filing: 06.12.82

(30) Priority: 07.12.81 HU 367781

(43) Date of publication of application:
20.07.83 Bulletin 83/29

(84) Designated Contracting States:
AT BE CH DE FR GB IT LI LU NL SE

(71) Applicant: Csepel Autogyár

H-2311 Szigetszentmiklos(HU)

(72) Inventor: Fellner, Oszkár
Bercsényi utca 7
H-1209 Budapest(HU)

(72) Inventor: Sváb, Ferenc
Török Flóris utca 10
H-1203 Budapest(HU)

(72) Inventor: Dobos, Hubert
Pozsonyi utca 6
H-1045 Budapest(HU)

(72) Inventor: Hatos, Géza
Béke tér 7
H-1214 Budapest(HU)

(74) Representative: Gold, Tibor Zoltán et al,
T.Z.GOLD & COMPANY 9, Staple Inn
London WC1V 7QH(GB)

(54) Process and apparatus for reducing the environment pollution effect of exhaust and other gases.

(57) A process and apparatus for reducing the environment-polluting effect of gases containing solid and liquid particles originating from a source, particularly the exhaust gases from an internal-combustion engine (10) involves passing the gases to be purified into a purifier (1) where an electric charging electrode (4) charges them electrically. Then the gases are caused to flow through a set of electrode plates (7) in the purifier (1). The charged solid and liquid particles contained in the gases are precipitated on the plates (7), which may be electrically charged and neutral or charged to a polarity of opposite sign to that of the charging electrode. The velocity of the gas flow in the purifier (1) may be regulated not to exceed 1 m/s. A mechanical separator may be connected in the purifier (1) downstream of the electrode plates (7). The electric charging increases the chemical activity of the oxygen as well as of the pollutants present in the gases.

Fig. 1

EP 0 083 845 A1

- 1 -

# PROCESS AND APPARATUS FOR REDUCING THE ENVIRONMENT POLLUTION EFFECT OF EXHAUST AND OTHER GASES

The invention relates partly to a process for reducing the environment pollution effect of gases containing solid and liquid particles flowing out from different polluting sources, particularly the exhaust gases of the internal combustion engine, by starting off and facilitating the chemical process transforming the polluting gases and liquid particles, as well as by separation of the liquid and solid particles.

On the other hand the invention relates to an apparatus for reducing the environment pollution effect of gases, particularly the exhaust gases of internal combustion engines containing solid and liquid particles flowing out from different polluting sources, preferably to such apparatus in which the transformation of the polluting gases and liquid particles is facilitated by chemical process, furthermore in which the liquid and solid particles can be separated.

It is well-known that mainly the various waste gases, or rather the exhaust gas of the internal combustion engines contain several en-

- 2 -

vironment polluting substances, such as carbon-monoxide, aromatic compounds, moreover liquid and solid pollutants (soot, flying ashes). Though the pollution effect can be reduced by improvement of the process taking place in the internal combustion engine, this can be realized more favourably by purification of the gas carrying liquid and solid particles, leaving behind the dust of the pollutant. Several solutions were born for the letter problem. The simplest solution, the filters and separators, e.g. metal shaving or metal sponge filters arranged in the silencer of the internal combustion engines, or various separators, e.g. cyclone separator based on the principle of sudden change of the flow-direction of the gases.

The filter and separator were not capable to treat the gaseous pollutants by any way, consequently the after-burning process without, then with boosted air was a further step ahead. Such are described in British patent No. 1 533 765, and West-German patent Nos.1 476 526, 1 576 769, 1 902 780 and 2 018 653.

The USA patent No. 3 950 944 was made for similar purpose, where electrolytic deoxidizing device carries out the purification of the combustion products, or the USA patent No. 4 250 707 and 4 250 860, where the combustion product leaving the engine is recirculated into the combustion chamber of the engine, and thus the environment pollution effect of the combustion product is reduced. The USA patent No. 3 967 445 attempts to reduce the environment pollution in an extremely complicated way with the aid of heat exchanger, after-burner and water-bath gas purifier, while the USA patent No. 4 037 407 transforms the poisonous gases with catalytic converter.

The common fault of the solutions described in the foregoing is that in the gas containing pollutants generally in several states leaving the polluting source, e.g. internal combustion engine, the pollutant can be reduced either in one or the other state only, use of their combination is costly, complicated and disproportionately heavy, and this a fault not negligible at all in case of the motorcars.

The USA patent No. 4 098 578 is worth mentioning, where the method of purification was further developed, whereby neutralization of the gases takes place with chemical reaction between

- 4 -

the gases and water. In this patent the reaction between the water or hydrogen discharging liquid and gas is facilitated by ionization of the mixture of liquid vapour and gas. However, filtration of the liquid and solid pollutants makes the operation of the purifier critical, since the structural elements producing the ionization cannot be provided with such protection that would prevent the blocking effect mainly of the solid pollutants, consequently the ionization stops after a short while.

Hence the problem is to work out such process, where by treatment of the gases leaving the polluting source, as well as the liquid and solid pollutants therein, and by separation of the liquid and solid pollutants the environment pollution caused by the polluting source is reducible, furthermore the problem is to work out such apparatus whereby the amount of gaseous, liquid and solid pollutants is reducible at the same time and more effectively than with the solutions known so far.

The fact already known leads to the solution, that as a result of the electric charge in the air, the oxygen becomes chemically more active, especially

- 5 -

through the arising ozone, at the same time the pollutants too are more inclined to chemical reaction upon the influence of the electric charge, while the electrically charged liquid and solid particles can be easily separated according to the principle of the electrostatic precipitator.

The invention relates to a process, whereby the environment pollution effect of gases leaving the polluting source, particularly the internal combustion engine containing liquid and solid particles, can be reduced by conducting the gases - leaving the given polluting source - into a purifier in which the gases are provided with electric charge, then the gases are conducted at a slow rate between armatures provided with neutral charge or with charge of opposite sign, then they are discharged from the purifier into the open air.

The invention relates to one of the preferred realization methods of the previous process, where the gases leaving the given polluting source are conducted into purifier, in which they are mixed with air provided with electric charge, then the mixture is provided with the same charge as the air, followed by conduction at a slow rate

- 6 -

between armatures provided with neutral charge, or charge with opposite sign, then the gases are discharged from the purifier into the open air.

The invention relates to one of the preferred realization methods of any of the previous processes, according to which after the gas, or the mixture of gas and air provided with electric charge have been provided with electric charge as described earlier, then conducting through armatures provided with neutral charge or charge with opposite sign, are conducted into mechanical cyclone, then discharged from the purifier into the open air.

The invention relates to purifier for reducing the environment pollution effect of gases containing liquid and solid particles leaving the polluting source particularly internal combustion engine, which has a housing with inlet port in the vicinity of one of its ends, the inlet port is connected directly or through pipeline with the polluting source, an outlet port is in the vicinity of the other end of the housing to connect the interior of the housing with the purifier, two electrodes are arranged between the inlet and outlet ports, the electrode at the inlet port is fixed to an electrically insulated support, the

- 7 -

electrode is connected to one of the poles of a direct current high voltage supply unit arranged outside the housing with an insulated cable, preferably with a cable conducted through the insulated support, the electrode at the outlet port is fixed directly in the: housing and connected to the other pole of the supply unit.

The invention relates to one of the preferred embodiments of the previous apparatus, in which the housing is divided by a separating wall into air and gas chambers, the air chamber is provided with inlet port in the wall of the housing for interconnection of the air chamber and purifier, a transfer port is in the separating wall between the two chambers, the gas chamber has an inlet port arranged in the vicinity of the separating wall connected directly or through pipeline to the polluting source, the gas chamber has an outlet port in the vicinity of its end opposite the separating wall connecting the gas chamber with the purifier, an electrode is arranged in the gas chamber as mentioned before, and a further electrode is arranged in the air chamber between the inlet port and transfer port arranged in the separating wall, the electrode is fixed onto elect-

- 8 -

ric insulator, the electrically insulated support is fixed to the housing, the electrode is connected to the pole of the said supply unit with insulated cable, preferably with cable conducted through the insulated support, said pole is connected with electrode arranged at the inlet port of the gas chamber.

The invention relates to a preferred embodiment of the described purifier, in which the electrode at the inlet port of the gas chamber is fixed to a metal support, which extends through the transfer port of the separating wall, and electric insulator is fixed to the wall-part surrounding the air chamber and this metal support is the said electrode of the air chamber at the same time.

The invention relates to another preferred embodiment of the previously described purifier, in which a piece of pipe is built onto the transfer port of the separating wall between the air chamber and gas chamber, said piece of pipe extends into the gas chamber and reaches over the inlet port of the gas chamber, but does not reach the electrode at the inlet port of the gas chamber.

The invention relates to a further preferred embodiment of the previously described purifiers, in which the inlet port of the housing admitting the gas to be purified is connected directly or through a pipeline to the outlet port of the air compressor.

The invention relates to another preferred embodiment of the previously described purifiers where one or several perforated plates are arranged along the full cross section of the housing between the inlet port of the housing admitting the gas to be purified and said electrode of this inlet port.

The invention relates to another preferred embodiment of the previously described purifiers, where a mechanical cyclone, preferably a labyrinth duct is arranged between the outlet port of the housing and electrode of the outlet port.

The invention relates to a further preferred embodiment of the previously described purifiers, where the electrode at the inlet port of the housing admitting the gas to be purified consists of one or several rows of wire extended between two or several supports.

The invention finally relates to a preferred

- 10 -

embodiment of the previously described purifiers, where the electrode at the outlet port of the housing is one or several metal plate(s) arranged parallel with the direction of gas flow.

The invention is demonstrated with the aid of drawings, in which:

Figure 1.: Schematic diagram of the apparatus suitable for execution of the process according to the invention,

Figure 2.: Schematic diagram of the apparatus suitable for the preferred realization methods of the process,

Figure 3.: Horizontal section of the apparatus according to the invention,

Figure 4.: Cross section of the previous apparatus at the indicated place,

Figure 5.: One of the preferred embodiments of the electrode suitable for the application of the electric charges.

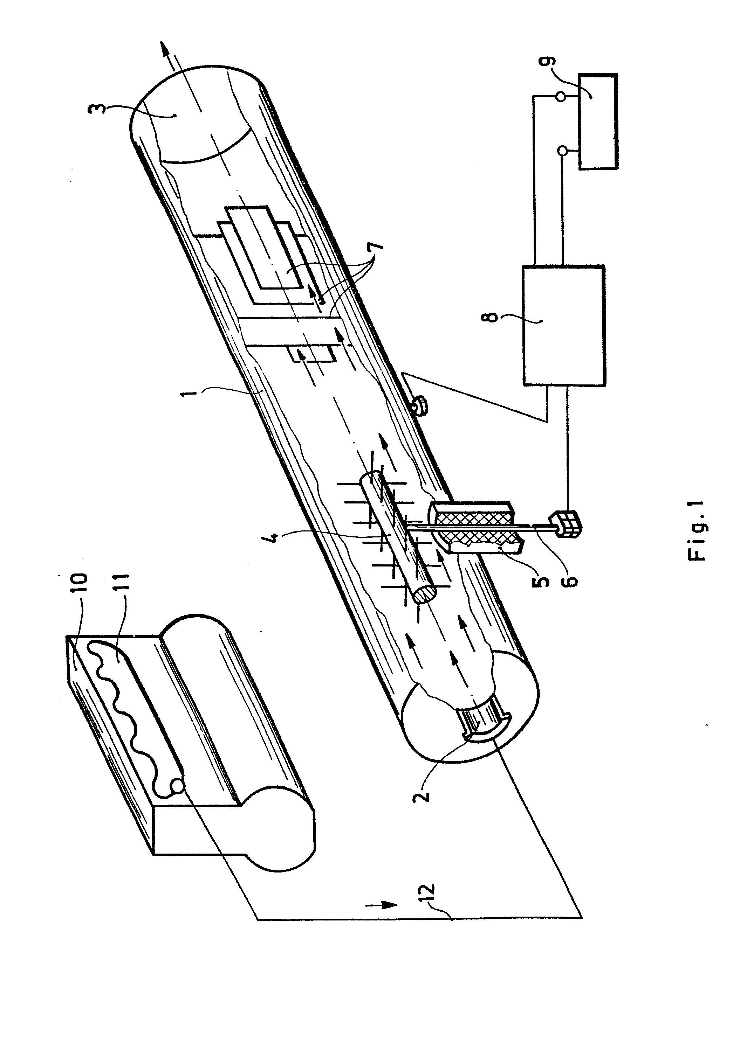

Inlet port 2 is arranged on one end of metal housing 1 of the purifier shown in Figure 1, while outlet port 3 is on the other end. Electrode 4 is arranged in the vicinity of the inlet port fixed with insulator 5 in the housing, supporting shank 6 of the electrode is conducted through an insulating body to the outside of the housing. Electrode 7 consisting of several parallel metal plates is arranged in the housing in the vicinity of the outlet port fixed to the housing by way of electrical conduction. The voltage necessary for operation of the apparatus is supplied by supply unit 8, one pole of which is fixed to shank 6 of electrode 4 conducted through insulator 5, while the other pole is fixed to the housing 1.

The supply unit receives the voltage from battery 9. The polluting source in this case is an internal combustion engine 10 the exhaust pipe 11 of which is connected through inlet port of the purifier. 10 KV direct voltage is connected to the electrodes.

The process according to the invention in the described apparatus takes place as follows:

The gas containing liquid and solid pollutants leaving the polluting source, e.g. the exhaust gas of engine 10 is conducted through inlet port 2 of the purifier.

The gas and the particles within it are provided with electric charge by electrode 4. The electric charge is produced with 10 kV direct voltage, being the value which does not cause flashover, only silent charge occurs. This is sufficient in respect of the process, which does not start off such avalanche-type processes which are difficult to influence, as the flashover.

Upon the influence of the electric charge partly active oxidants such as ozone arise in the gases, which through oxidation, e.g. oxidation of carbon monoxide, and partly through other processes the transformation of several polluting compounds, e.g. hydrocarbons, nitrogen compounds takes place, resulting in the reduction of the environment polluting gases, and similarly the environment pollution effect of the liquid and solid particles is reduced as well. The gas containing liquid and solid particles and provided with electric charge is conducted between electrode 7 provided with charge of opposite sign, where the liquid and solid particles are separated.

The flow velocity may be maximum 1.0 m/sec, since at higher velocity the flowing gas may entrain solid particles beyond the electrode. The gas purified by transformation of the pollutants, first of all the gases, and by separation of the liquid and solid particles on the other electrode, can be discharged into the open air.

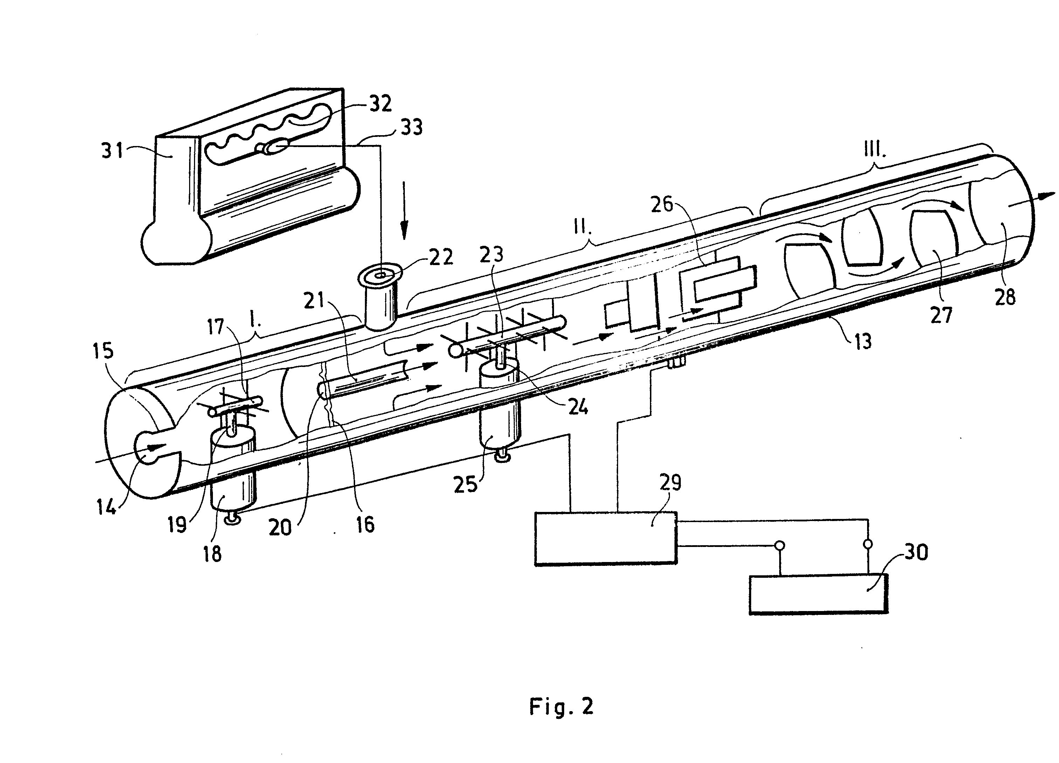

The interior of the metal housing 13 of the purifier shown in Figure 2., is divided into three parts, namely air chamber I, gas chamber II, and mechanical cyclone III. The air chamber I is confined at one end by end-wall 15 of housing provided with air inlet port 14, and the other end by separating wall 16. Electrode 17 is arranged in the air chamber held by supporting shank 19 conducted through insulator 18 fixed in the wall of the housing.

Separating wall 16 is provided with hole 20, and pipe 21 from the gas chamber is fitted onto the hole.

Gas chamber II is constructed identically with the apparatus shown in Figure 1., i.e. the inlet port 22 is in the vicinity of the separating wall, electrode 23 on supporting shank 24 conducted through insulator 25 is fixed in the wall of the housing in the vicinity of inlet port, but separated from pipe 21, while electrode 26 consisting of plates fixed to the housing by metal to metal contact is arranged towards the other end of gas chamber II.

Mechanical cyclone III is arranged between outlet port 28 on the other end of the housing and electrode 26, which is for instance a labyrinth filter consisting of alternately arranged plates 27 not fully filling out the cross section.

The voltage necessary for operation of the apparatus is supplied by supply unit 29, one pole of which is connected to supporting shank 19 and 24 of electrode 17 and 23 respectively, the other pole is connected to the housing 13. The supply unit receives the voltage for instance from battery 30.

The polluting source may be for instance an internal combustion engine 31, the exhaust pipe 32 of which is connected through exhaust pipe 33 to the inlet port 22 of the gas chamber II of the purifier. In this case 10-12 V direct voltage is connected to the electrodes.

The process according to the invention takes place in the described apparatus as follows:

The exhaust gas containing liquid and solid pollutants leaving the polluting source, in given case internal combustion engine, pass through the inlet port of gas chamber II into the gas chamber II, where it flows towards the electrode 23. During flow the gas absorbs air from the air chamber I as a result of the suction effect produced by

- 15 -

pipe 21 built onto the hole 20 of the separating wall 16. The air is electrically charged by electrode 17, thus the gas is mixed with the electrically charged air in gas chamber II. The mixture in the gas chamber II flows further and passes through the electrically charged space produced by electrode 23, then it passes through between electrodes 26 at the rate of 1.0 m/sec, finally passes through the mechanical cyclone III into the open air. Admittance of the electrically charged air increases the amount of oxidants and thereby improves the efficiency of the transformation of the pollutants. Use of the mechanical cyclone is advantageous, because upon the influence of the electric charge, large-size grains will be produced from the solid pollutants, which - due to their large volume - can not be separated by the electrode plates.

Whether the process is used is the basic one, or with admission of electrically charged air, or with a mechanical cyclone, or they are used jointly depends on the quantity and type of the pollutants. For checking the invention the experiments were conducted with Diesel engine and it was found that the joint application resulted in the purification of 80 % of the exhaust gas.

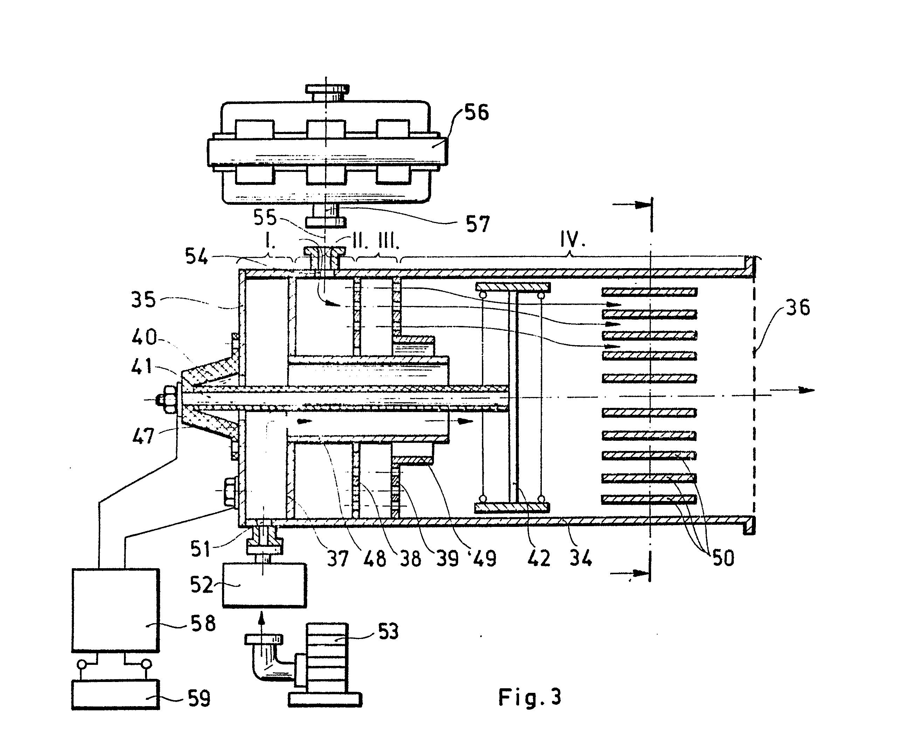

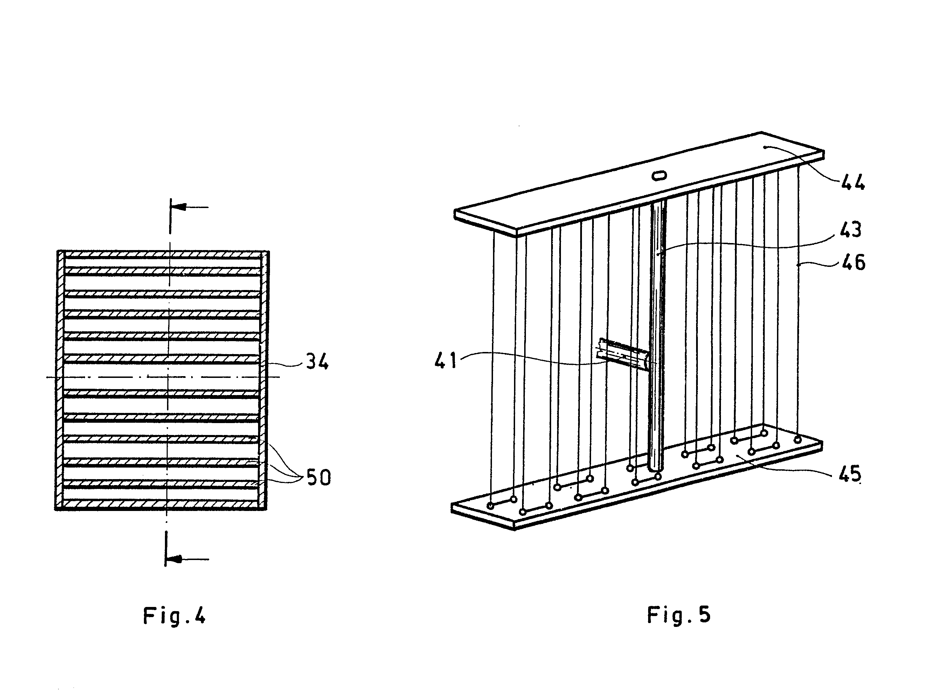

The purifier according to the invention is demonstrated with one of its preferred embodiment as shown in Figures 3, 4, 5.

One end of the metal housing 34 of the purifier is provided with a lockable cover 35, and the other end with wire mesh 36. Interior of the purifier is divided by separating walls 37, 38, 39 into air chamber I, buffer chambers II and III, and gas chamber IV.

A hole is formed in the centre of cover 35 above which an insulating bell 40 made of insulating material, e.g. porcelain or glass is arranged, through the hole of which the supporting shank of electrode 41 extends through the holes formed in separating walls 37, 38, 39 into the gas chamber IV. Electrode 42 is built onto the electrode supporting shank. The electrode supporting shank is surrounded with insulating pipe 47 made of porcelain or glass.

Electrode 42 consists of a cross beam 43 fixed to the supporting shank, supporting plates 44, 45 arranged on the two ends and heat- and corrosion-resistant wire 46 stretched in two rows between the ends.

Air baffle pipe 48 is built onto the hole in separating wall 37 in such a way  that it extends through the hole in the separating walls 38 and 39 into the gas chamber IV, and its inside diameter is larger than the outside diameter of the insulating pipe 47 surrounding the supporting shank of electrode 41 arranged in the centre. Wall 39 is formed with an annular pipe 49.

The precipitation electrode consisting of metal plates 50 is arranged in the vicinity of wire net 36 in the gas chamber IV. The metal plates 50 are vertically arranged in housing 34 and fixed with metal to metal contact to the housing 34.

Air inlet port 51 leading to air chamber I is arranged in the wall of housing 34, to which the dry air filter 52 or compressor 53 is connectible in case of necessity.

Gas inlet port 54 to buffer chamber II  is formed in the wall of housing 34, to which the polluting gas discharge source, in given case the exhaust stub 57 ·of the internal combustion engine  56 is connected through pipeline 55.

Supply unit 58 is used for electric supply of the purifier, one  pole  of which is connected to the supporting shank of electrode 41 extending through insulating bell 40, while the other terminal to the cover 35 in metal to metal contact with housing 34. The supply unit 58 receives the voltage from voltage source 59, in given case from battery.

The purifier functions as follows:

The exhaust gas flows from the exhaust pipe 57 of the internal combustion engine 56 through pipeline 55 and inlet port 54 into the buffer chamber II, then into the buffer chamber III. Both buffer chambers have sound-damping role uniformly distributing the exhaust gas with the aid of separating walls 38 and 39 along the full cross section of the purifier.

The exhaust gas flows from the buffer chamber III partly through the perforation of the separating wall 39 and partly through the gas baffle pipe 49 into the gas chamber IV. Meanwhile the air baffle pipe 48 functions as pump and sucks fresh air through air chamber I, air inlet port 51 and dry air filter 52 into the gas chamber IV.

The air has several purposes.

The electrode-supporting shank 41 and the insulating pipe 47 therein are dimensioned as to apply electric charge to the surrounding air. As mentioned before, the purifier functions effectively  if no arc discharge exists, only silent discharge. Since the distance between the electrode -supporting shank 41 and metal surfaces in its vicinity is small, consequently the silent discharge can be tuned by dimensioning of the insulating pipe 47. Hence the electrode-supporting shank 41 is the electrode that charges the air electrically.

The other purpose of the air is to keep away the solid impurities from the insulating bell 40 by constant flow, and thereby it prevents deposition of the impurities onto the insulating bell 40, which would make the purifier blocked and unserviceable. For this reason is the insulator shaped as a bell, there is no air movement in the air-pocket, which also prevents the deposition of the impurities.

The third purpose of the air is cooling. The purifier does not function effectively on high temperature, mainly over $500^{o}C$, and though the exhaust gases do not receive this temperature, it is advisable to cool the apparatus and exhaust gas.

- 20 -

Since efficiency of the purifier is determined first of all as to what extent is the active oxidant present upon the influence of the electric charges, it is advisable to purify the air entering the air chamber I from the large-size impurities, because these absorb the electric charge and substantially higher amount of the electric charge is required to bring about the same active oxidant. For this reason it is advisable to suck the air into the air chamber I through a filter.

It may occur for instance in case of running the internal combustion engine at low speed, that the exhaust gas flowing into the air chamber III is not capable to absorb adequate amounts of air. Should such event occur, it is advisable to feed in the air. This may take place with exhaust gas-operated turbo-charge too, which naturally feeds the air into air chamber I instead of into the suction system of the engine.

The exhaust gas flowing into the gas chamber IV mixes with sucked-in electrically charged air and the mixture passes between the elements of electrode 42. The electrode gives further electric charge to the mixture. Here takes place the already described process , then the mixture passes through
the precipitating electrode consisting of metal
plates 50, where the purification of the exhaust
gas is completed. The purified exhaust gas leaves
the purifier through wire net 36. The purifier
must function with the same efficiency for at
least 2000 operating hours without cleaning, depending on its dimensions, thereafter the impurities  deposited on the electrode consisting of metal plates 50 have to be removed. This can be
realized after removal of the wire net by scraping off and sweeping down the metal plates.

The purifier receives 10-12 kV direct voltage from supply unit 58, the pole "0" is connected
to cover 35. In view of the fact  that in case of
motor vehicles the voltage source is generally the
battery or dynamo of the engine, or the side of ·
the generator after the rectifier, therefore producing the alternating current for transformation
of the supply unit is fairly difficult owing to
the transformation then again rectification; however, the Hungarian specifications do not allow
the direct connection of the apparatus to the generator. Where this is permissible, the produc-·
tion of the alternating current at the supply unit
can be· dispensed with.

- 22 -

The above described purifier does not include the mechanical cyclone, naturally this can be built to the apparatus.

Finally it has to be mentioned that according to the present state of the technology communication of the electric charge with gases is economically possible by electrostatic process. Other method is also conceivable, e.g. isotope treatment, when the separating electrode is earthed, this is what understood under the earlier mentioned expression of "neutral electrode."

Hence the process and apparatus according to the invention are capable to remove the gaseous, liquid and solid pollutants from the gases leaving the polluting source resulting in minimum 80 % efficiency, more-over the soot can be completely separated from the exhaust gas of the internal combustion engine at a low cost and with an easily realizable method.

## Claims

1.   A process for reducing the environment-polluting effect of gases containing solid and liquid phase pollutants and originating from a source of pollution, e.g. an internal-combustion engine, characterised by applying an electric charge to the said gases so as to promote the chemical activity of the components of the gases and/or the pollutants therein, conducting the said gases at a controlled velocity to a separator for separating the solid and liquid phase pollutants, and then discharging the gases into the atmosphere.

2.   A process as claimed in claim 1, characterised in that before application of an electric charge the gases are mixed with electrically charged air.

3.   A process according to claim 2, characterised in that the electric charge applied to the mixture is the same as that of the air.

4.   A process as claimed in any preceding claim, characterised in that the velocity of flow of the gases through the separator is controlled to be at most 1.0 m/sec velocity.

5.   A process as claimed in any preceding claim, characterised in that the gases or the mixture of gases and air are or is passed through a mechanical cyclone before being discharged into the atmosphere.

6. Apparatus for reducing the environment-polluting effect of gases which contain solid and liquid-phase pollutants and which originate from a source of pollution, e.g. an internal-combustion engine, the apparatus being characterised in that it comprises a purifier housing (1, 13, 34) provided with an inlet (2, 22, 54) for the pollutant-containing gases connectable to said source (10, 31, 56), an outlet (3, 28) for decontaminated gases, electric charge-applying means (4, 23, 42) in said housing (1, 13, 34), and separator means (7, 26, 50) in said housing (1, 13, 34) downstream of said charge-applying means (4, 23, 42) but upstream of said outlet (3, 28).

7. Apparatus according to claim 6, characterised in that the said housing (1, 13, 34) is provided with an air chamber (I) having an air entry opening (14, 51) and an exit opening (20, 21) which is in flow communication with a mixing space (II, III, Fig. 3) disposed between said inlet (14, 51) for the polluted gases and said electric charge-applying means (4, 23, 42), the said air chamber (I) accommodating a further electric charge-applying means (17; 41), effective electrically to charge the air passing out of the exit opening (20, 21).

8. Apparatus according to claim 6 or 7, characterised in that the two said charge-applying means (23, 42; 17, 41) are electrostatic charge-applying means connected to the same pole of a common direct voltage supply unit (29; 58).

9. Apparatus according to any of claims 6 to 8, characterised in that the said housing (13) includes a mechanical separator (27), preferably in the form of a plurality of spaced-apart baffle plates arranged to cause the gases to flow along a sinuous path to form a cyclone effect, arranged between the said separator means (26), preferably electrostatic precipitator plates, and said outlet (28).

10. Apparatus according to claim 7 or any claim appendant thereto, characterised in that said further electric charge-applying means (41) is an electrically conductive member which is elongated in the direction of the longitudinal axis of said housing (34) and projecting from the upstream end (35) of said air chamber (I) through the latter and through said mixing space (II, III) into a gas chamber (IV), the first-mentioned electric charge-applying means (42) being mounted on the free end of said member (41), the opposite end of said member (41) being connectable to an upstream end (35) of the air chamber (I) by way of an insulating bell (40) which surrounds the said opposite end with an annular clearance to form a pocket of still air.

Fig.1

0083845

Fig. 2

Fig.3

3/4

0083845

Fig.4

50  34

Fig.5

41
0
45  46  43  44

European Patent Office

**EUROPEAN SEARCH REPORT**

Application number

EP 82 30 6486

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 01 N 3/02 |
| X | DE-B-1 080 349 (SFINDEX) <br><br> *Column 2, line 49 to column 10, line 56; figure 1* | 1,5,6, 8,9 | |
| | --- | | |
| A | GB-A- 850 321 (STYRIE) <br> *Column 3, lin 8 to column 4, line 86; figures 1-3* | 1,6 | |
| | --- | | |
| A | CH-A- 372 033 (MESSEN-JASCHIN) <br> *Column 4, line 26 to column 6, line 38; figure 1* | 1,6 | |
| | ----- | | |

TECHNICAL FIELDS SEARCHED (Int Cl 3)

F 01 N

The present search report has been drawn up for all claims

| Place of search | Date of completion of the search | Examiner |
|---|---|---|
| THE HAGUE | 09-02-1983 | SCHMID R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82